# EUROPÄISCHE PATENTSCHRIFT

(11) **EP 1 227 014 B1**
(45) Veröffentlichungstag und Bekanntmachung des Hinweises auf die Patenterteilung: **12.10.2005**
(21) Anmeldenummer: 02000221.8
(22) Anmeldetag: 11.01.2002
(51) Int. Cl.: B60R 21/20, B60R 22/24, B60R 13/02, B60R 21/16

(54) **Fahrzeuginsassen-Rückhaltevorrichtung**
Vehicle occupant restraining device
Dispositif de retenue pour occupant de véhicule

(30) Priorität: 30.01.2001 DE 20101564 U
(43) Veröffentlichungstag der Anmeldung: 31.07.2002
(73) Patentinhaber: TRW Automotive GmbH, 73553 Alfdorf (DE)
(72) Erfinder: Ritter, Philipp, 73525 Schwäbisch Gmünd (DE)
(74) Vertreter: Kitzhofer, Thomas

(56) Entgegenhaltungen:
- EP-A- 0 639 485
- DE-A- 19 650 940
- DE-U- 29 818 411
- DE-U- 29 921 743
- GB-A- 2 293 355
- US-A- 5 273 309
- US-A- 5 556 128

## Beschreibung

Die Erfindung betrifft eine Fahrzeuginsassen-Rückhaltevorrichtung gemäß dem Oberbegriff des Anspruchs 1.

Im Fall eines Unfalls können Seitengassäcke einen Fahrzeuginsassen vor schweren Verletzungen bewahren. Die besten Ergebnisse werden erzielt, wenn sowohl der Kopf des Fahrzeuginsassen als auch sein Thoraxbereich von einem Gassack aufgefangen werden können. Aufgrund der baulichen Gegebenheiten in den meisten Fahrzeugen können Kopf und Thoraxbereich eines Insassen jedoch nicht mit einem einzigen Gassack optimal geschützt werden. Daher werden in bekannten Rückhaltevorrichtungen zwei getrennte Gassackmodule eingesetzt, die an unterschiedlichen Stellen im Fahrzeug montiert sind.

Es sind auch Systeme bekannt, bei denen zwei Gassäcke an einem Ort, z.B. in der Türbrüstung angeordnet sind, von denen sich beim Befüllen ein Gassack nach oben in Richtung der Seitenscheiben und der andere Gassack nach unten in Richtung des Thoraxbereichs des Fahrzeuginsassen erstreckt. Beide Systeme weisen Nachteile auf. Werden zwei eigenständige Gassackmodule verbaut, steigt die Zahl der eingesetzten Bauteile und damit die Herstellungs- und Montagekosten. Bei einem einteiligen System ist es nicht einfach, eine Anordnung zu finden, bei der beide Gassäcke einen optimalen Schutz bieten können. Außerdem steigt hier die Baugröße des Gassackmoduls.

Die DE 196 50 940 A1 zeigt z.B. ein System, bei dem in der B-Säule ein Gassackmodul angeordnet ist, das zwei Gassäcke enthält, die sich jeweils zum Schutz eines Front- bzw. Heckinsassen entfalten. Jeder Gassack hat eine so große vertikale Ausdehnung, daß sowohl der Kopf- als auch der Thoraxbereich des jeweiligen Insassen abgedeckt sind.

In der DE 299 21 743 U1 ist eine Anordnung aus mehreren am Dachrahmen liegenden Kopfschutz-Gassäcken dargestellt, die über einen ebenfalls am Dachrahmen angeordneten Gasverteiler gleichzeitig befüllt werden.

Die Erfindung schafft eine Fahrzeuginsassen-Rückhaltevorrichtung, die bei einer geringen Bauteilzahl einen wirkungsvollen Schutz des Fahrzeuginsassen gewährleistet.

Die erfindungsgemäße Rückhaltevorrichtung ist durch die Merkmale des Anspruchs 1 gekennzeichnet. Der Gassack zum Schutz des Kopfes des Fahrzeuginsassen sowie der zweite Gassack zum Schutz des Thorax des Insassen können also an unterschiedlichen Stellen angeordnet sein und dennoch über nur einen Gasgenerator mit Füllgas versorgt werden. Die Anordnung des zweiten Gassacks in der B-Säule ermöglicht es zum Beispiel, den Gassack fest über eine Gasführung mit einem an einer anderen Stelle des Fahrzeugs gelegenen Gasgenerator zu verbinden.

Der erste Gassack ist bevorzugt ein Seitengassack, der sich in einem aufgeblasenen Zustand im Bereich der Seitenscheiben im wesentlichen von der A-Säule bis zur C-Säule des Fahrzeugs erstreckt. Eine solche Konstruktion ist gut bekannt und gewährleistet einen optimalen Schutz für die Köpfe von Fahrzeuginsassen sowohl auf den vorderen als auch auf den hinteren Sitzen.

Eine Anordnung des Gasgenerators im Bereich der B-Säule, besonders an einem Dachrahmen des Fahrzeugs, bietet den Vorteil, daß einerseits auf eine bewährte Konstruktion für den Seitengassack zurückgegriffen wird und andererseits die Wegstrecke, über die das Füllgas vom Gasgenerator zu den Gassäcken geleitet wird, minimiert werden kann. Ein bekanntes Seitengassackmodul kann so auf einfache Weise erweitert werden, um einen zusätzlichen Schutz für den Thorax des Fahrzeuginsassen zu erreichen.

Alternativ kann der Gasgenerator, z.B. ein Kaltgasgenerator, auch im unteren Teil der B-Säule angeordnet sein. In diesem Fall wird der erste, den Kopf schützende Gassack über die Gasleitung mit Druckgas versorgt. Dies hat den Vorteil, daß ein Gasgenerator zur Erzeugung eines großen Gasvolumens verwendet werden kann, da im unteren Teil der B-Säule ein ausreichender Bauraum zur Verfügung steht. Dies erlaubt den Einsatz von Gassackanordnungen mit einem großen Gesamtvolumen. Die beschriebene Anordnung ist auch deshalb günstig, da der den Thorax schützende Gassack zuerst aufgeblasen wird und so der Thorax des Fahrzeuginsassen, der bei einem Seitenaufprall die Fahrzeugseitenwand vor dem Kopf erreicht, frühzeitig abgefangen werden kann.

Wenn der Gasgenerator mit einem Gasverteiler mit wenigstens zwei Ausgängen verbunden ist, kann einer der Ausgänge in Strömungsverbindung mit dem ersten Gassack und einer der Ausgänge in Strömungsverbindung mit dem zweiten Gassack stehen. Der Gasverteiler und die Ausgänge sind bevorzugt so ausgelegt, z.B. durch unterschiedliche Querschnitte der Ausgänge, daß für die mit unterschiedlichen Volumina behafteten Gassäcke eine jeweils optimale Gaszufuhr eingestellt wird.

Bevorzugt ist die Gasleitung vom Gasgenerator zum zweiten Gassack durch einen Teil der B-Säule gebildet, wobei die Gasleitung in der B-Säule selbst oder in einer Verkleidung der B-Säule ausgebildet sein kann. So läßt sich die Zahl der benötigten Bauteile weiter reduzieren.

Vorteilhaft ist der zweite Gassack in einem unaufgeblasenen Zustand in einem Gehäuse angeordnet, wobei das Gehäuse einstückig mit einer Verkleidung der B-Säule ausgebildet ist. Auch mit dieser Maßnahme lassen sich Bauteile einsparen.

An der Verkleidung der B-Säule können außerdem noch ein Gurtaufroller sowie Abschnitte des damit verbundenen Sicherheitsgurts zur Bildung einer vormontierten Einheit angebracht sein, so daß diese Komponenten mit dem zweiten Gassack zusammen an der Verkleidung vormontiert werden. Der Montageaufwand am Fahrzeug läßt sich so verringern, da nur die Verkleidung der B-Säule angebracht werden muß.

Weitere Merkmale und Vorteile der Erfindung ergeben sich aus der nachfolgenden Beschreibung von Ausführungsbeispielen in bezug auf die beigefügten Zeichnungen. In diesen zeigen:,
- Figur 1 eine erfindungsgemäße Fahrzeuginsassen-Rückhaltevorrichtung nach einer ersten Ausführungsform;
- Figur 2 die Gassäcke einer zweiten Ausführungsform einer erfindungsgemäßen Fahrzeuginsassen-Rückhaltevorrichtung,
- Figur 3 eine dritte Ausführungsform einer erfindungsgemäßen Fahrzeuginsassen-Rückhaltevorrichtung; und
- Figur 4 eine vierte Ausführungsform einer erfindungsgemäßen Fahrzeuginsassen-Rückhaltevorrichtung.

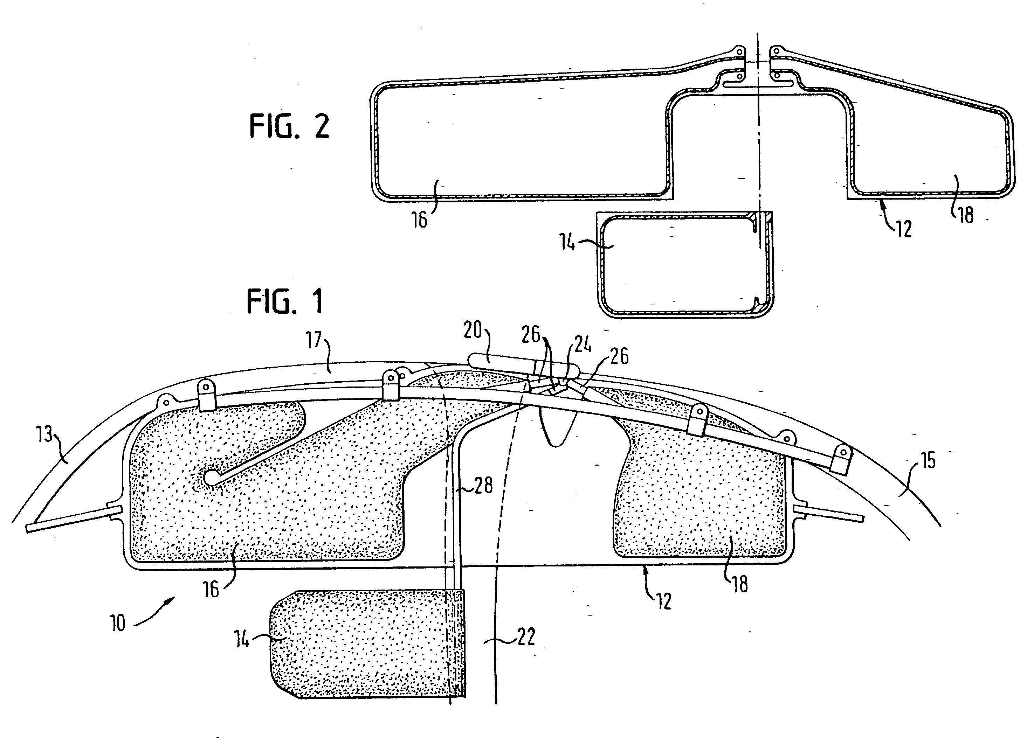

Die in Figur 1 dargestellte Fahrzeuginsassen-Rückhaltevorrichtung 10 weist zwei Gassäcke 12, 14 auf, von denen der erste Gassack 12 als vorhangartiger Seitengassack ausgebildet ist, der sich im wesentlichen von der A- bis zur C-Säule 13, 15 des Fahrzeugs erstreckt. Der Gassack 12 ist in zwei Rückhaltekammern 16, 18 unterteilt, die einen Schutz für den Kopf eines Fahrzeuginsassen auf dem Vorder- bzw. dem Rücksitz bilden. Die beiden Rückhaltekammern 16, 18 können auf bekannte Weise durch nicht aufblasbare Bereiche miteinander verbunden sein.

Der zweite Gassack 14, der im aufgeblasenen Zustand den Thoraxbereich des Fahrzeuginsassen schützen soll, ist im nicht aufgeblasenen Zustand an der B-Säule 22 angeordnet. Vorzugsweise bildet eine Verkleidung der B-Säule 22 auch gleichzeitig ein Gehäuse für den Gassack 14. So kann das Gehäuse in die Verkleidung der gesamten B-Säule integriert sein, und es müssen keine zusätzlichen Bauteile montiert werden.

Es ist natürlich auch möglich, in der Verkleidung der B-Säule 22 ein separates Gehäuse oder nur eine Abdeckung für den Gassack 14 vorzusehen.

In den Figuren 1, 2 und 4 sind die Gassäcke 12, 14 im ausgebreiteten bzw. aufgeblasenen Zustand gezeigt

Am Dachrahmen 17 des Fahrzeugs ist im Bereich des oberen Endes der B-Säule 22 ein Gasgenerator 20 befestigt. Der Gasgenerator 20 ist mit einem aus Metall oder aus Kunststoff gefertigten Gasverteiler 24 verbunden, der im gezeigten Beispiel drei Ausgänge 26 aufweist. Zwei der Ausgänge 26 bilden eine Gasverbindung zu den Rückhaltekammern 16, 18 des ersten Gassacks 12, während der dritte Ausgang 26 mit einer Gasleitung 28 verbunden ist, die zum zweiten Gassack 14 führt. Wenn der Gasgenerator 20 im Bereich der B-Säule angeordnet ist, läßt sich ein möglichst kurzer und gerader Verlauf der Gasleitung 28 ermöglichen.

Die Gasleitung 28 ist im Bereich der B-Säule 22 angeordnet und ist bevorzugt ein integraler Bestandteil der B-Säule. Die Gasleitung 28 kann entweder in der B-Säule selbst oder in einer Verkleidung der B-Säule 22 ausgebildet und auch ein in der B-Säule 22 verlegtes textiles Rundgewebe sein. Es ist denkbar, daß die Gasleitung 28 innen oder außen beschichtet ist. Die Gasleitung 28 kann auch aus Metall gefertigt sein.

Wichtig ist, daß der Übergang von den Ausgängen 26 zu den Rückhaltekammern 16, 18 sowie zur Gasleitung 28 gasdicht ist, damit der nötige Gasdruck in den Gassäcken 12, 14 aufgebaut und über die benötigte Zeit aufrechterhalten werden kann. Dies gilt natürlich auch für die Verbindung der Gasleitung 28 mit dem zweiten Gassack 14.

Die Gassäcke 12, 14 können auf unterschiedliche Arten hergestellt sein. Eine bevorzugte Herstellungsweise sieht vor, daß die Gassäcke 12, 14 aus jeweils zwei miteinander verwebten Gewebestücken gefertigt sind. Das Gewebe kann unbeschichtet oder beschichtet sein, wobei die Beschichtung ein Silikon, ein Urethan oder eine Laminierung sein kann. Die Beschichtung kann im Inneren des Gassacks oder von außen auf den Gassack aufgebracht sein. Die Gassäcke können auch aus miteinander vernähten Gewebestücken hergestellt sein.

Figur 2 zeigt ein Ausführungsbeispiel eines ersten Gassacks 12 und eines zweiten Gassacks 14, die aus zwei verwebten Gewebestücken gebildet sind. Die Anordnung und die Größen der einzelnen Kammern 16, 18 des ersten Gassacks 12 sind dabei so gewählt, daß der zwischen den Kammern 16, 18 liegende Bereich groß genug und so geformt ist, daß der zweite Gassack 14 daraus gefertigt werden kann.

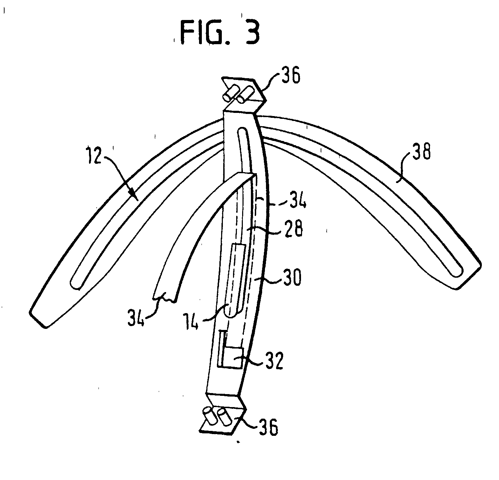

In Figur 3 ist eine weitere Ausführungsform einer Fahrzeuginsassen-Schutzvorrichtung dargestellt. Hier sind in der Verkleidung 30 der B-Säule zusätzlich zur Gasleitung 28 und dem zweiten Gassack 14 ein Gurtaufroller 32 sowie ein mit dem Gurtaufroller verbundener Abschnitt eines Sicherheitsgurts 34 zur Bildung einer vormontierbaren Einheit angebracht. Die Verkleidung 30 kann mittels geeigneter Befestigungsmittel 36 am Fahrzeug angebracht werden.

Der erste Gassack 12 ist in dieser Ausführungsform hinter einer Dachrahmenverkleidung 38 angeordnet.

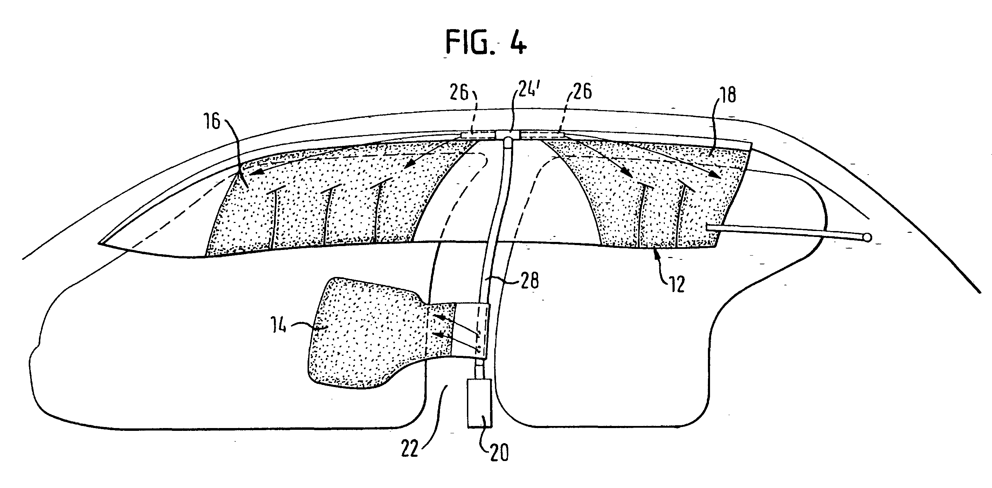

Bei der in Figur 4 gezeigten vierten Ausführungsform ist der Gasgenerator 20 im unteren Bereich der B-Säule 22 angeordnet. Der Gasgenerator 20 ist mit der Gasleitung 28 verbunden, die hier als Gaslanze ausgebildet ist und direkt auf den Gasgenerator 20 aufgepreßt sein kann. Der Gasgenerator 20 ist ein Stück unterhalb des zweiten Gassacks 14 angebracht, so daß der Gasfluß vom Gasgenerator 20 ausgehend zuerst den zweiten Gassack 14 und dann den ersten Gassack 12 erreicht. Im Bereich des zweiten Gassacks 14 weist die Gasleitung 28 Ausströmöffnungen auf, zu denen das Gas durch in der Gasleitung 28 angeordnete Ausströmflächen, sogenannten Kiemen, geleitet werden kann, so daß ein Teil des Gases in den Gassack 14 abströmt. Der Gassack 14 entfaltet sich daher zu einem relativ frühen Zeitpunkt nach der Aktivierung des Gasgenerators 20. Dieser Zeitpunkt liegt bevorzugt bei etwa 15 ms, um den Thorax des Fahrzeuginsassen möglichst früh abzufangen.

Der restliche Gasstrom gelangt über die Gasleitung 28 zu einem am Dachrahmen 17 angeordneten Gasverteiler 24', der zwischen zwei Rückhalteklammern 16, 18 des ersten Gassacks 12 positioniert ist und dessen Ausgänge 26 strömungsmäßig mit je einer Kammer 16, 18 verbunden sind. Der Gasverteiler kann z.B. ein aus Kunststoff bestehendes T-Stück sein. Der Gassack 12 ist bevorzugt nach etwa 25 ms aufgeblasen.

In den gezeigten Ausführungsbeispielen weisen der erste Gassack 12 in etwa ein Volumen von 18 l und der zweite Gassack 14 in etwa ein Volumen von 11 l auf. Zur Befüllung der Gassäcke wird demnach ein Gasgenerator 22 benötigt, der ein Füllvolumen von etwa 30 l liefern kann. Solche Gasgeneratoren sind bereits in vielen Anwendungen eingesetzt, so daß sie als Standardbauteile erhältlich sind. Dies verringert die Kosten der Rückhaltevorrichtung weiter.

## Patentansprüche

1. Fahrzeuginsassen-Rückhaltevorrichtung mit
einem Gasgenerator (20),
einem ersten Seitengassack (12) und
einem zweiten Seitengassack (14),
wobei der erste Gassack (12) und der zweite Gassack (14) jeweils mit dem Gasgenerator (20) verbunden sind und
der erste Gassack (12) vom zweiten Gassack (14) baulich getrennt ist,
wobei sich der erste Gassack (12) in einem aufgeblasenen Zustand im Bereich des Kopfs eines Fahrzeuginsassen erstreckt und in einem nicht aufgeblasenen Zustand im Bereich eines Dachrahmens eines Fahrzeugs angeordnet ist,
**dadurch gekennzeichnet, daß** sich der zweite Gassack (14) in einem aufgeblasenen Zustand im Bereich des Thorax desselben Fahrzeuginsassen erstreckt und in einem nicht aufgeblasenen Zustand an einer B-Säule (22) des Fahrzeugs angeordnet ist und
einer der beiden Gassäcke (12, 14) mit dem Gasgenerator (20) über eine längs der B-Säule (22) verlaufende Gasleitung (28) verbunden ist.

2. Fahrzeuginsassen-Rückhaltevorrichtung nach Anspruch 1, **dadurch gekennzeichnet, daß** der erste Gassack (12) sich in einem aufgeblasenen Zustand im Bereich der Seitenscheiben im wesentlichen von der A-Säule bis zur C-Säule des Fahrzeugs erstreckt.

3. Fahrzeuginsassen-Rückhaltevorrichtung nach einem der vorhergehenden Ansprüche, **dadurch gekennzeichnet, daß** der Gasgenerator (20) an einem Dachrahmen (17) des Fahrzeugs im Bereich des Übergangs zur B-Säule (22) angeordnet ist.

4. Fahrzeuginsassen-Rückhaltevorrichtung nach einem der Ansprüche 1 und 2, **dadurch gekennzeichnet, daß** der Gasgenerator (20) im unteren Teil der B-Säule (22) angeordnet ist.

5. Fahrzeuginsassen-Rückhaltevorrichtung nach einem der vorhergehenden Ansprüche, **dadurch gekennzeichnet, daß** die Gasleitung (28) durch einen Teil der B-Säule (22) gebildet ist.

6. Fahrzeuginsassen-Rückhaltevorrichtung nach einem der vorhergehenden Ansprüche, **dadurch gekennzeichnet, daß** der Gasgenerator (20) mit einem Gasverteiler (24) mit wenigstens zwei Ausgängen (26) verbunden ist, wobei einer der Ausgänge (26) in Strömungsverbindung mit dem ersten Gassack (12) und einer der Ausgänge (26) in Strömungsverbindung mit dem zweiten Gassack (14) steht.

7. Fahrzeuginsassen-Rückhaltevorrichtung nach einem der vorhergehenden Ansprüche, **dadurch gekennzeichnet, daß** der zweite Gassack (14) in einem unaufgeblasenen Zustand in einem Gehäuse angeordnet ist.

8. Fahrzeuginsassen-Rückhaltevorrichtung nach Anspruch 7, **dadurch gekennzeichnet, daß** das Gehäuse einteilig mit einer Verkleidung (30) der B-Säule (22) ausgebildet ist.

9. Fahrzeuginsassen-Rückhaltevorichtung nach Anspruch 8, **dadurch gekennzeichnet, daß** an der Verkleidung (30) der B-Säule (22) ein Gurtaufroller (32) und ein Abschnitt eines Sicherheitsgurts (34) zur Bildung einer vormontierten Einheit angebracht sind.

## Claims

1. A vehicle occupant restraint device comprising
a gas generator (20),
a first side airbag (12), and
a second side airbag (14),
the first airbag (12) and the second airbag (14) each being connected to the gas generator (20), and
the first airbag (12) being structurally separated from the second airbag (14),
the first airbag (12), in an inflated state, extending in the area of the head of a vehicle occupant and, in a non-inflated state, being arranged in the area of a roof frame of a vehicle,
**characterized in that** the second airbag (14), in an inflated state, extends in the thorax region of the same vehicle occupant and, in a non-inflated state, is arranged on a B-column (22) of the vehicle, and
one of the two airbags (12, 14) is connected to the gas generator (20) via a gas line (28) running along the B-column (22).

2. The vehicle occupant restraint device according to Claim 1, **characterized in that**, in an inflated state, the first airbag (12) extends in the area of the side windows essentially from the A-column to the C-column of the vehicle.

3. The vehicle occupant restraint device according to either of the preceding claims, **characterized in that** the gas generator (20) is arranged on a roof frame (17) of the vehicle in the area of the transition to the B-column (22).

4. The vehicle occupant restraint device according to either of Claims 1 and 2, **characterized in that** the gas generator (20) is arranged in the lower part of the B-column (22).

5. The vehicle occupant restraint device according to any of the preceding claims, **characterized in that** the gas line (28) is formed by part of the B-column (22).

6. The vehicle occupant restraint device according to any of the preceding claims, **characterized in that** the gas generator (20) is connected to a gas distributor (24) having at least two outlets (26), one of the outlets (26) being in flow connection with the first airbag (12) and one of the outlets (26) being in flow connection with the second airbag (14).

7. The vehicle occupant restraint device according to any of the preceding claims, **characterized in that**, in a non-inflated state, the second airbag (14) is arranged in a housing.

8. The vehicle occupant restraint device according to Claim 7, **characterized in that** the housing is formed in one piece with a lining (30) of the B-column (22).

9. The vehicle occupant restraint device according to Claim 8, **characterized in that** a belt retractor (32) and a section of a safety belt (34) are fitted to the lining (30) of the B-column (22) in order to form a pre-assembled unit.

## Revendications

1. Dispositif de retenue de passager de véhicule, comportant
générateur de gaz (20),
un premier coussin à gaz latéral (21) et
un deuxième coussin à gaz latéral (14),
le premier coussin à gaz (12) et le deuxième coussin à gaz (14) étant reliés chacun au générateur de gaz (20), et
le premier coussin à gaz (12) étant séparé du deuxième coussin à gaz (14) du point de vue construction,
le premier coussin à gaz (12) s'étendant, dans un état gonflé, dans la région de la tête d'un passager de véhicule et étant agencé, dans un état non gonflé, dans la région d'un cadre de toit d'un véhicule,
**caractérisé en ce que** le deuxième coussin à gaz (14) s'étend, dans un état gonflé, dans la région du thorax du même passager de véhicule et étant agencé, dans un état non gonflé, sur une colonne B (22) du véhicule, et
un des deux coussins à gaz (12, 14) étant relié au générateur de gaz (20) via une conduite de gaz (28) s'étendant le long de la colonne B (22).

2. Dispositif de retenue de passager de véhicule selon la revendication 1, **caractérisé en ce que** le premier coussin à gaz (12) s'étend, dans un état gonflé, dans la région des vitres latérales sensiblement depuis la colonne A jusqu'à la colonne C du véhicule.

3. Dispositif de retenue de passager de véhicule selon l'une des revendications précédentes, **caractérisé en ce que** le générateur de gaz (20) est agencé sur un cadre de toit (17) du véhicule dans la région de la transition vers la colonne B (22).

4. Dispositif de retenue de passager de véhicule selon la revendication 1 et 2, **caractérisé en ce que** le générateur de gaz (20) est agencé dans la partie inférieure de la colonne B (22).

5. Dispositif de retenue de passager de véhicule selon l'une des revendications précédentes, **caractérisé en ce que** la conduite de gaz (28) est formée par une partie de la colonne B (22).

6. Dispositif de retenue de passager de véhicule selon l'une des revendications précédentes, **caractérisé en ce que** le générateur de gaz (20) est relié à un distributeur de gaz (24) comportant au moins deux sorties (26), une des deux sorties (26) étant en liaison d'écoulement avec le premier coussin à gaz (12) et une des sorties (26) étant en liaison d'écoulement avec le deuxième coussin à gaz (14).

7. Dispositif de retenue de passager de véhicule selon l'une des revendications précédentes, **caractérisé en ce que** dans un état non gonflé, le deuxième coussin à gaz (14) est agencé dans un boîtier.

8. Dispositif de retenue de passager de véhicule selon la revendication 7, **caractérisé en ce que** le boîtier est réalisé d'un seul tenant avec une garniture (30) de la colonne B (22).

9. Dispositif de retenue de passager de véhicule selon la revendication 8, **caractérisé en ce que** sur la garniture (30) de la colonne B (22) sont montés un enrouleur de ceinture (32) et un tronçon d'une ceinture de sécurité (34) pour former une unité préassemblée.
